# EUROPÄISCHE PATENTSCHRIFT

(11) **EP 1 188 980 B1**
(45) Veröffentlichungstag und Bekanntmachung des Hinweises auf die Patenterteilung: **04.06.2003**
(21) Anmeldenummer: 01119294.5
(22) Anmeldetag: 10.08.2001
(51) Int. Cl.: F16L 47/02

(54) **Schweissmuffe**
Welding sleeve
Raccord de soudage

(30) Priorität: 06.09.2000 DE 10044135
(43) Veröffentlichungstag der Anmeldung: 20.03.2002
(73) Patentinhaber: Friatec Aktiengesellschaft, 68229 Mannheim (DE)
(72) Erfinder: Maier, Fabian, 67368 Westheim (DE)
(74) Vertreter: Schmitt, Meinrad, Dipl.-Ing.

(56) Entgegenhaltungen:
- EP-A- 0 711 948
- DE-C- 19 927 778
- US-A- 5 687 996

## Beschreibung

Die Erfindung bezieht sich auf eine Schweißmuffe gemäß den im Oberbegriff des Patentanspruchs 1 angegebenen Merkmalen. Eine solche Schweißmuffe ist aus DE 296 19 861 U bekannt.

Aus der JP 09 273 690 A ist eine derartige Schweißmuffe aus schweißbarem Kunststoff bzw. thermoplastischem Material bekannt, in deren Muffenkörper die Enden von zwei Rohren einschiebbar sind, wobei durch Elektroschweißen die Verbindung der Rohrenden mittels der Schweißmuffe durchführbar ist. Die Schweißmuffe enthält an beiden Enden jeweils ein Zungenstück mit radial innenliegenden Ausnehmungen zur Aufnahme eines Halteelements, welches als Sicherungsband ausgebildet ist. Nach dem Einschieben des Rohrendes in die Muffe ist das Sicherungsband zur Festlegung des Rohrendes an diesem zu befestigen. Das Sicherungsband enthält hierzu Verbindungs- bzw. Verschlußmittel, um das Festspannen auf der Außenfläche des Rohrendes zu ermöglichen. Sofern das Sicherungsband bei der Montage nicht ordnungsgemäß festgespannt wird, ist die Sicherung des Rohrendes bezüglich der Schweißmuffe in der erforderlichen Weise nicht gewährleistet.

Desweiteren ist aus der DE 196 53 314 C1 eine Schweißmuffe aus schweißbarem Kunststoff bzw. thermoplastischem Material bekannt, deren Muffenkörper im Bereich seiner Innenfläche eine Heizwendel oder Heizwicklung aus elektrisch leitendem Draht enthält. Diese Schweißmuffe ist als Doppelmuffe ausgebildet und dient zur Verbindung von zwei Rohren. Die mit der Schweißmuffe zu verbindenden Rohre weisen in der Praxis regelmäßig nicht die ideale, axial langgestreckte Form auf, zumal die Rohre üblicherweise auf großen Trommeln bereitgestellt werden und dementsprechend gebogen sind. Ferner müssen Rohre oftmals mit vergleichsweise geringem Krümmungsradius entsprechend dem Verlauf einer Straße, eines Grabens oder dergleichen gebogen verlegt werden. Um auch unter derartigen Bedingungen eine funktionsgerechte Verschweißung zu ermöglichen, weist die Innenfläche der vorbekannten Schweißmuffe zumindest im Endbereich zwischen der Heizwendel und dem freien Ende des Muffenkörpers eine polygonale Form auf. Hierdurch wird eine mechanische Klemmung erreicht, welche auch während der Schweißung und der hierbei erfolgenden Materialerwärmung im Bereich der Heizwendel derart aufrechterhalten wird, daß Relativbewegungen oder gar ein Herausziehen des Rohrendes aus der Schweißmuffe während des Schweißens vermieden werden kann. Die Fertigung der polygonalen Innenfläche erfordert einen nicht unerheblichen zusätzlichen Aufwand. Auch können die insbesondere axialen Haltekräfte nur bis zur vergleichsweise niedrigen Grenzen vorgegeben und eingehalten werden, so daß Probleme bei entsprechend vergrößerten Kräften zu befürchten sind.

Ferner ist aus dem Gebrauchsmuster DE 296 19 861 U1 eine Kunststoff-Schweißmuffe bekannt, welche am Muffenende außen ein zusätzliches Spannelement in Form einer Rohrschelle oder dergleichen aufweist. Das Muffenende ist im Bereich des Spannelements mit wenigstens einem axialen Schlitz versehen, damit beim Festziehen des Spannelements das freie Muffenende auf die Außenfläche des eingeschobenen Rohrendes geklemmt werden kann, um somit die Haltekräfte zu erzeugen. Die Fertigung und die Montage dieser Elektro-Schweißmuffe erfordern einen zusätzlichen Aufwand, zumal zur Montage das Festspannen des Spannelements mit besonderer Sorgfalt durchzuführen ist. Gleichwohl sind Montagefehler nicht mit der erforderlichen Sicherheit auszuschließen, so daß während des Schweißens Relativbewegungen zwischen Rohrende und Schweißmuffe zu Fehlschweißungen führen können.

Hiervon ausgehend soll die Schweißmuffe der genannten Art dahingehend weitergebildet werden, daß mit geringem Fertigungs- und Montageaufwand eine funktionssichere Verschweißung des in die Muffe eingeschobenen Rohrendes durchführbar ist. Nach dem Einschieben in die Schweißmuffe soll das Rohrende zuverlässig fixiert sein und insbesondere während des Schweißens sollen Relativbewegungen des Rohrendes bezüglich der Schweißmuffe mit hoher Sicherheit vermieden werden. Die Handhabung zur Vorbereitung und Durchführung der Schweißung soll erleichtert werden, wobei insbesondere als Rollenware bereitgestellte Rohre bezüglich der Schweißmuffe hinsichtlich Relativbewegungen zuverlässig gesichert sein sollen.

Die Lösung dieser Aufgabe erfolgt gemäß den Merkmalen des Patentanspruchs 1.

Die erfindungsgemäße Schweißmuffe zeichnet sich durch einen einfachen und funktionsgerechten Aufbau aus und ermöglicht bei einfacher Handhabung eine problemlose Herstellung der Schweißverbindung der Schweißmuffe mit dem eingeschobenen Rohrende. Am Ende der Schweißmuffe ist ein Halteelement angeordnet, durch welches das Rohrende durchführbar ist und welches mit einer Innenfläche mit der Rohraußenfläche in Eingriff gelangt, wobei nach dem vollständigen Einschieben in die Schweißmuffe bzw. den Muffenkörper eine insbesondere axiale Relativbewegung des Rohrendes bezüglich der Schweißmuffe unterbunden wird. Die Schweißmuffe enthält einen Haltekörper zur Festlegung des Halteelements. Das Halteelement besteht in vorteilhafter Weise aus Metall und/oder aus Blech und enthält eine Öffnung zum Durchschieben des Rohrendes, wobei die Innenfläche des Halteelements zumindest näherungsweise gleich groß ist wie der Außendurchmesser des Rohrendes. Der das Rohrende umgebende Teil des Halteelements ist in zweckmäßiger Weise ringförmig, und zwar insbesondere als geschlossener Ring ausgebildet. Ferner besitzt das Halteelement einen mit dem Haltekörper in Eingriff stehenden Teil, welcher in bevorzugter Weise gleichfalls ringförmig ausgebildet ist. In besonders vorteilhafter Weise ist die Steckerbuchse, welche zum Anschluß einer elektrischen Leitung an die Heizwicklung vorgesehen ist, als Haltekörper ausgebildet. Der dem Haltekörper zugeordnete zweite Teil des Halteelements enthält eine auf den Außendurchmesser der Steckerbuchse abgestimmte Öffnung. Das Halteelement kann somit mit dem genannten zweiten Teil über bzw. auf den Haltekörper geschoben und mit dem Muffenkörper verbunden werden. Der dem Rohrende zugeordnete erste Teil des Haltekörpers und der dem Haltekörper bzw. der Steckerbuchse zugeordnete zweite Teil des Halteelements sind zueinander unter einem vorgegebenen Winkel abgewinkelt, insbesondere in einem Winkelbereich zwischen 90 bis 130 Winkelgrade. Das Halteelement ist vorteilhaft im Verbindungsbereich zwischen den beiden Teilen elastisch und/oder plastisch verformbar ausgebildet.

Das Halteelement ist ein separates Bauteil, welches nach der Fertigung der Schweißmuffe in bevorzugter Weise mit bzw. an dem genannten Haltekörper derart befestigbar ist, daß anschließend der erste Teil des Haltekörpers sich vor dem freien Ende der Schweißmuffe befindet und das Rohrende durch die erste Öffnung schiebbar ist und in das Innere der Schweißmuffe eingeführt werden kann. Wirken nachfolgend entgegen der Einschubrichtung auf das Rohrende Kräfte ein, so gelangen Bereiche der Innenfläche der ersten Öffnung des Halteelements mit der Außenfläche des Rohrendes in Eingriff, wobei ggf. eine kleine Schwenkbewegung des ersten Teils entgegen der Einschubrichtung bzw. weg von der Schweißmuffe eintreten kann. Die genannten Innenflächenbereiche und insbesondere die Innenkanten des ersten Teils des Halteelements werden infolge der ermöglichten Schwenkbewegung zudem verstärkt in die Außenfläche eingepreßt, wodurch ein funktionssicheres Festhalten des Rohrendes gewährleistet ist. Zusätzlich oder alternativ kann die erläuterte Schwenkbewegung des ersten Teils des Halteelements auch dadurch erreicht werden, daß der zweite Teil des Halteelements bezüglich des Haltekörpers in einem gewissen Maße bewegbar ist. Dies wird insbesondere aufgrund von Toleranzen zwischen dem zweiten Teil des Halteelements und dem Haltekörper, insbesondere der Steckerbuchse ohne besonderen Aufwand sichergestellt. Falls somit auf das eingeschobene Rohrende eine insbesondere axiale Auszugskraft einwirkt, unterbindet das mit dem Rohrende in Eingriff stehende Halteelement mit hoher Funktionssicherheit das Herauslösen des Rohrendes aus der Schweißmuffe bzw. dem Muffenkörper. Das Halteelement kann bei beliebigen handelsüblichen Schweißmuffen zum Einsatz gelangen, ohne daß eine Änderung der Schweißmuffen bzw. der zur Herstellung derselben benötigten Werkzeuge erforderlich ist. Ggf. kann aber auch ein zusätzlicher Haltekörper zur Festlegung des Halteelements, insbesondere an der Außenfläche der Schweißmuffe in analoger Weise vorgesehen sein. Ferner kann das Halteelement von Fall zu Fall, wenn also die Montagebedingungen es erfordern, mit der Schweißmuffe gekoppelt werden; falls Relativbewegungen zwischen dem Rohrende und der Schweißmuffe nicht zu befürchten sind, kann auf das Halteelement verzichtet werden.

An dieser Stelle sei ausdrücklich festgehalten, daß die erfindungsgemäße Schweißmuffe als Fitting zum Verbinden von zwei Rohrenden, sei es als Doppelmuffe oder als Winkelstück, ebenso ausgebildet sein kann, wie als Bestandteil eines Übergangsstückes oder einer Armatur oder sonstigen Formteils, mit welchem das Rohrende durch Schweißen zu verbinden ist. Ferner werden von der Erfindung nicht nur Schweißmuffen bzw. Elektro-Schweißmuffen erfaßt, welche eine mit Strom und / oder Spannung beaufschlagbare Heizwicklung oder Heizwendel zur Erwärmung des Kunststoffes auf die Schweiß- oder Schmelztemperatur enthalten. Die Erwärmung kann gleichermaßen durch andere Verfahren oder Vorrichtungen erfolgen, wobei hier vor allem auf das Induktionsschweißen oder das Mikrowellenschweißen ausdrücklich hingewiesen wird.

Weiterbildungen und besondere Ausgestaltungen sind in den Unteransprüchen sowie der weiteren Beschreibung angegeben.

Die Erfindung wird nachfolgend anhand des in der Zeichnung dargestellten besonderen Ausführungsbeispiels näher erläutert, ohne daß insoweit eine Beschränkung erfolgt. Es zeigen:
- Fig. 1: eine seitliche Ansicht der Schweißmuffe mit Halteelement und eingeschobenem Rohrende,
- Fig. 2-6: perspektivische Darstellungen der Schweißmuffe, des Halteelements und des Rohrendes zur Erläuterung der Funktionsweise und Montage.

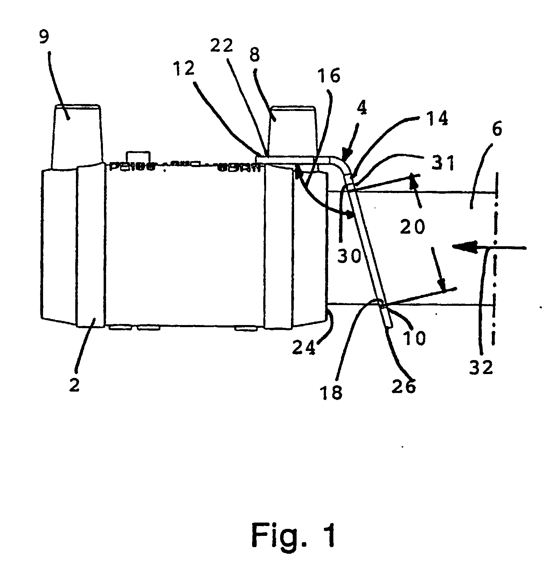

Fig. 1 zeigt in einer seitlichen Ansicht die Schweißmuffe 2, das Halteelement 4 sowie das Rohr 6, dessen Rohrende in die Schweißmuffe 2 eingeschoben ist. Die Schweißmuffe 2 enthält in bekannter Weise im Bereich der Innenfläche eine hier nicht weiter dargestellte Heizwicklung bzw. Heizwendel aus elektrisch leitendem Draht, dessen Enden jeweils in eine Steckerbuchse 8, 9 geführt sind, über welche in bekannter Weise der Anschluß an ein elektrisches Schweißgerät durchführbar ist. Die Schweißmuffe 2 ist als Doppelmuffe ausgebildet und entsprechend dem Rohr 6 kann, gemäß Zeichnung links, ein weiteres Rohrende eingeschoben werden, wobei in entsprechender Weise ein weiteres Halteelement vorgesehen ist. Anstelle der Doppelmuffe zur Verbindung von zwei Rohrenden kann die Schweißmuffe im Rahmen der Erfindung auch nur zur Verbindung mit einem Rohrende ausgebildet und Bestandteil einer Armatur, eines Formstücks oder dergleichen sein.

Das in bevorzugter Weise aus Metall und / oder Blech bestehende Halteelement 4 enthält einen ersten Teil 10 und einen zweiten Teil 12, welche über einen Verbindungsbereich 14 bevorzugt einteilig miteinander verbunden sind. Die beiden Teile 10, 12 sind im Verbindungsbereich 14 zueinander unter einem vorgebbaren Winkel 16 abgewinkelt, welcher bevorzugt mindestens 90° groß ist und vorteilhaft in der Größenordnung von 110° liegt und bevorzugt maximal 130° groß ist. Der erste Teil 10 enthält eine Öffnung 18, durch welche das Rohr bzw. dessen Ende hindurch geschoben ist. Der zweite Teil 12 ist mit dem Haltekörper 8 verbunden und enthält hierfür bevorzugt eine zweite Öffnung 22, welche auf den Haltekörper 8 abgestimmt ist und in welche letzterer eingreift. Die Öffnung 18 besitzt einen Innendurchmesser 20, welcher zumindest näherungsweise gleich groß ist wie der Außendurchmesser des Rohres 6. Wie ersichtlich, ist der erste Teil 10 des Halteelements 4 axial vor dem freien Ende 24 der Schweißmuffe 2 bzw. deren Muffenkörper angeordnet. Der zweite Teil 12 ist im wesentlichen parallel zur Längsachse der Schweißmuffe 2 angeordnet.

Der erste Teil 10 des Halteelements 4 ist in zweckmäßiger Weise als ein geschlossener Ring ausgebildet und besitzt, insbesondere diametral zum Verbindungsbereich 14, einen bevorzugt als radiale Erweiterung ausgebildeten Griff 26. Mittels des Griffs 26 kann der erste Teil 10 bei Bedarf in einfacher Weise in Richtung auf das freie Muffenende 22 gedrückt werden, um so das Halteelement außer Eingriff mit dem Rohr zu bringen. Der erste Teil 10 enthält die genannte erste Öffnung 18 mit einer Innenfläche, welche mit Kanten 30, 31 im Bereich der beiden axialen Stirnflächen des ersten Teils 10 endet. Mittels der Innenfläche 28 und / oder den axialen Kanten 30, 31 gelangt das Halteelement bzw. der erste Teil 10 mit der Außenfläche des Rohres 6 in Eingriff. Darüber hinaus kann im Rahmen der Erfindung der erste Teil 10 und / oder dessen Innenfläche 28 mit Haken, Zähnen, Krallen oder dergleichen versehen sein, welche hier nicht weiter dargestellt sind, um ein sicheres Eingreifen in die Rohraußenfläche zu gewährleisten und ein unerwünschtes Herausziehen des Rohrendes aus der Schweißmuffe zu verhindern.

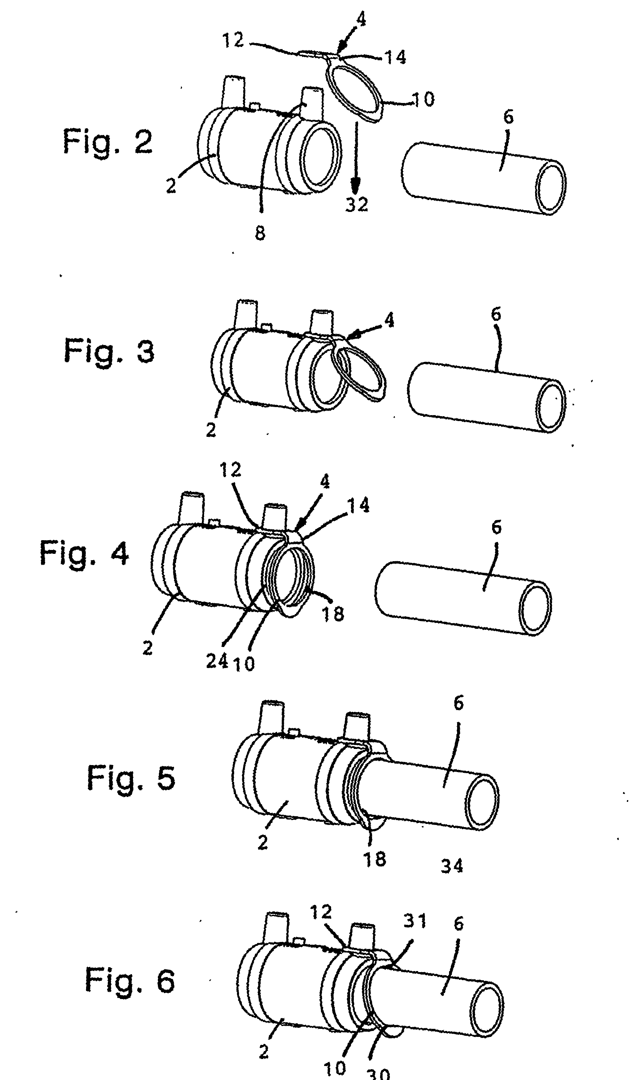

Fig. 2 zeigt die Schweißmuffe 2, das Halteelement 4 und das Rohr 6 zu Beginn der Montage. Das Halteelement 4 mit den beiden abgewinkelten Teilen 10, 12 wird in Richtung des Pfeiles 32 derart auf die Schweißmuffe 2 aufgesetzt, daß der zweite Teil 12 mit dem Haltekörper 8, welcher gleichzeitig die Steckerbuchse ist, in Eingriff gelangt. Nach dem vollständigen Aufschieben ragt gemäß Fig. 3 der Haltekörper 8 durch die Öffnung des zweiten Teiles 12 hindurch.

Nachfolgend wird gemäß Fig. 4 der erste Teil 10 des Halteelements 4, insbesondere manuell, vor das freie Ende 24 der Schweißmuffe 2 gedrückt. Hierbei wird das Halteelement 4 im Verbindungsbereich 14 derart gebogen, daß der oben an Hand von Fig. 1 erläuterte Winkel 16 zumindest näherungsweise gegen 90° geht. Nunmehr liegt der erste Teil 10 mit der ersten Öffnung 18 im wesentlichen in einer zur Längsachse der Schweißmuffe orthogonalen Radialebene. Es sei festgehalten, daß grundsätzlich die rechtwinklige Ausrichtung der beiden Teile 10,12 auch werkseitig schon vorbereitet werden kann, doch kann, insbesondere im Hinblick auf geringeren Platz- und Lagerbedarf, das Haltelement 4 in zweckmäßiger Weise nicht oder auch nur leicht angewinkelt bereit gehalten werden.

Gemäß Fig. 5 ist das Rohr 6 mit seinem Rohrende durch die Öffnung 18 des ersten Teils 10 hindurch in die Schweißmuffe 2 in Richtung des Pfeiles 34 eingeschoben. Wirken nachfolgend gemäß Fig. 6 entgegen der Einschubrichtung 32 Relativkräfte zwischen der Schweißmuffe 2 und dem Rohr 6, so wird letzteres mittels des Halteelements 4 bezüglich der Schweißmuffe 2 arretiert. Die Innenfläche bzw. Teile derselben und insbesondere deren Stirnkanten 30, 31 gelangen mit der Außenfläche des Rohres 6 in Eingriff und verhindern ein unzulässiges Herausziehen des Rohres 6 aus der Schweißmuffe 2. Hierbei kann der oben genannte Winkel zwischen dem ersten Teil 10 und dem zweiten Teil 12 etwas vergrößert werden, wobei in Fig. 6 diese Winkelvergrößerung lediglich aus Gründen der besseren Verständlichkeit vergrößert dargestellt ist.

### Bezugszeichen

- 2: Schweißmuffe / Muffenkörper
- 4: Halteelement
- 6: Rohr
- 8, 9: Haltekörper / Steckerbuchse
- 10: erster Teil von 4
- 12: zweiter Teil von 4
- 14: Verbindungsbereich
- 16: Winkel
- 18: erste Öffnung in 10
- 20: Innendurchmesser von 18
- 22: zweite Öffnung in 12
- 24: freies Ende von 2
- 26: Griff
- 30, 31: Kante
- 32, 34: Pfeil

## Patentansprüche

1. Schweißmuffe, enthaltend einen Muffenkörper (2), in welchen ein Rohr (6) einschiebbar ist, ein insbesondere als Heizwendel ausgebildetes Heizelement zum Verschweißen des in den Muffenkörper (2) eingeschobenen Ende des Rohres (6), sowie ein mit einem Haltekörper (8, 9) der Schweißmuffe verbundenes Haltelement (4), welches einen vor einem freien Ende (24) der Schweißmuffe (2) angeordneten ersten Teil (10) mit einer Öffnung (18) aufweist, durch welche hindurch das Rohr (6) in den Muffenkörper (2) einschiebbar ist, wobei eine Innenfläche des ersten Teils (1 0) zumindest teilweise mit der Rohraußenfläche in Eingriff bringbar ist, **dadurch gekennzeichnet, dass** das Halteelement (4) einen zweiten Teil (12) aufweist, mittels welchem die Verbindung mit dem Haltekörper (8, 9) der Schweißmuffe (2) herstellbar ist, und dass der Haltekörper (8, 9) und der zweite Teil (1 2) des Halteelements (4) im Bereich der Außenfläche des Muffenkörpers (2) angeordnet sind.

2. Schweißmuffe nach Anspruch 1, **dadurch gekennzeichnet, daß** der Haltekörper (8, 9) durch eine Steckerbuchse gebildet ist.

3. Schweißmuffe nach Anspruch 1 oder 2, **dadurch gekennzeichnet, dass** der zweite Teil (12) eine zweite Öffnung (22) aufweist, in welche der Haltekörper (8, 9) eingreift.

4. Schweißmuffe nach einem der Ansprüche 1 bis 3, **dadurch gekennzeichnet, dass** der erste Teil (10) zum zweiten Teil (12) des Halteelements (4) unter einem Winkel (16) angeordnet ist.

5. Schweißmuffe nach einem der Ansprüche 1 bis 4, **dadurch gekennzeichnet, dass** der erste Teil (10) zumindest näherungsweise in einer Radialebene bezüglich der Längsachse des Muffenkörpers (2) in einem Bereich vor und / oder an dem freien Ende (24) des Muffenkörpers (2) angeordnet ist.

6. Schweißmuffe, insbesondere nach einem der Ansprüche 1 bis 5, **dadurch gekennzeichnet, dass** das Haltelement (4) als ein separates und mit dem Haltekörper (8, 9) bedarfsweise verbindbares Bauelement ausgebildet ist.

7. Schweißmuffe nach einem der Ansprüche 1 bis 6, **dadurch gekennzeichnet, dass** das Halteelement (4) aus Metall, insbesondere Blech besteht und / oder dass der zweite Teil (12) des Halteelements (4) im wesentlichen parallel zur Längsachse des Muffenkörpers (2) angeordnet ist.

## Claims

1. Welding sleeve containing a sleeve body (2) in which a pipe (6) can be inserted, a heating element designed, in particular, as a heating spiral, for welding the end of the pipe (6) inserted in the sleeve body (2) and a holding element (4) connected to a holding body (8, 9) of the welding sleeve and which comprises a first part (10) arranged in front of a free end (24) of the welding sleeve (2) and comprising an opening (18) through which the pipe (6) can be inserted into the sleeve body (2), wherein an inner face of the first part (10). can be brought at least partially into engagement with the pipe outer face, **characterised in that** the holding element (4) comprises a second part (12) by means of which the connection to the holding body (8, 9) of the welding sleeve (2) can be produced, and **in that** the holding body (8, 9) and the second part (12) of the holding element (4) are arranged in the region of the outer face of the sleeve body (2).

2. Welding sleeve according to claim 1, **characterised in that** the holding body (8, 9) is formed by a socket.

3. Welding sleeve according to claim 1 or 2, **characterised in that** the second part (12) has a second opening (22) in which the holding body (8, 9) engages.

4. Welding sleeve according to any of claims 1 to 3, **characterised in that** the first part (10) is arranged at an angle (16) to the second part (12) of the holding element (4).

5. Welding sleeve according to any of claims 1 to 4, **characterised in that** the first part (10) is arranged at least approximately in a radial plane with respect to the longitudinal axis of the sleeve body (2) in a region before and/or on the free end (24) of the sleeve body (2).

6. Welding sleeve, in particular according to any of claims 1 to 5, **characterised in that** the holding element (4) is constructed as a separate component which can be connected, if necessary to the holding body (8, 9).

7. Welding sleeve according to any of claims 1 to 6, **characterised in that** te holding element (4) consists of metal, in particular sheet metal, and/or **in that** the second part (12) of the holding element (4) is arranged substantially parallel to the longitudinal axis of the sleeve body (2).

## Revendications

1. Raccord de soudage, comprenant un corps de raccord (2), dans lequel est insérable un tuyau (6), un élément de chauffage réalisé en particulier comme une spirale chauffante pour le soudage de l'extrémité du tuyau (6), insérée dans le corps de raccord (2), ainsi qu'un élément de retenue (4) relié à un corps de retenue (8, 9) du raccord de soudage, élément qui présente une première partie (10) disposée devant une extrémité libre (24) du raccord de soudage (2), avec une ouverture (18) par laquelle le tuyau (6) peut être inséré dans le corps de manchon (2), une surface interne de la première partie (10) pouvant être amenée du moins partiellement en engagement avec la surface externe du tuyau,
**caractérisé en ce que** l'élément de retenue (4) présente une seconde partie (12) au moyen de laquelle on peut établir la connexion avec le corps de retenue (8, 9) du raccord de soudage (2) et **en ce que** le corps de retenue (8, 9) et la second partie (12) de l'élément de retenue (4) sont disposés dans la zone de la surface externe du corps de raccord (2).

2. Raccord de soudage selon la revendication 1, **caractérisé en ce que** le corps de retenue (8, 9) est formé par une douille à fiche.

3. Raccord de soudage selon la revendication 1 ou 2, **caractérisé en ce que** la seconde partie (12) présente une seconde ouverture (22) dans laquelle s'engage le corps de retenue (8, 9).

4. Raccord de soudage selon l'une des revendications 1 à 3, **caractérisé en ce que** la première partie (10) est disposée en formant un angle (16) par rapport à la seconde partie (12) de l'élément de retenue (4).

5. Raccord de soudage selon l'une des revendications 1 à 4, **caractérisé en ce que** la première partie (10) est disposée au moins approximativement dans un plan radial par rapport à l'axe longitudinal du corps de raccord (2) dans une zone devant et/ou sur l'extrémité libre (24) du corps de raccord (2).

6. Raccord de soudage selon l'une des revendications 1 à 5, **caractérisé en ce que** l'élément de retenue (4) est réalisé comme un élément séparé et pouvant être relié au besoin au corps de retenue (8, 9).

7. Raccord de soudage selon l'une des revendications 1 à 6, **caractérisé en ce que** l'élément de retenue (4) se compose de métal, en particulier de tôle et/ou la seconde partie (12) de l'élément de retenue (4) est disposée essentiellement parallèlement à l'axe longitudinal du corps de raccord (2).
